Europäisches Patentamt

European Patent Office

Office européen des brevets

(19)

(11) Veröffentlichungsnummer: **0 209 869**
**B1**

(12) # EUROPÄISCHE PATENTSCHRIFT

(45) Veröffentlichungstag der Patentschrift:
20.12.89

(51) Int. Cl.⁴: **B60B 39/00**

(21) Anmeldenummer: 86109935.6

(22) Anmeldetag: **19.07.86**

(54) Schwenkvorrichtung für ein Schleuderkettenaggregat eines Kraftfahrzeuges.

(30) Priorität: **20.07.85 DE 3525981**

(43) Veröffentlichungstag der Anmeldung:
**28.01.87 Patentblatt 87/5**

(45) Bekanntmachung des Hinweises auf die Patenterteilung:
**20.12.89 Patentblatt 89/51**

(84) Benannte Vertragsstaaten:
**AT BE CH DE FR GB IT LI NL SE**

(56) Entgegenhaltungen:
**DE-A- 3 100 975**
**DE-C- 266 487**
**US-A- 1 374 252**
**US-A- 2 283 948**

(73) Patentinhaber: **Gerd Schulz Fahrzeug- und Container-Technik, Besselstrasse 9,
D-2100 Hamburg 90(DE)**

(72) Erfinder: **Schulz, Gerd, Besselstrasse 9,
D-2100 Hamburg 90(DE)**
Erfinder: **Hartleif, Hans-Peter, Rotbergskamp 20c,
D-2100 Hamburg 90(DE)**

(74) Vertreter: **Eisenführ & Speiser, Martinistrasse 24,
D-2800 Bremen 1(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Schwenkvorrichtung für ein Schleuderkettenaggregat eines Kraftfahrzeuges, mit einem Antrieb, einer mittels des Antriebs längsverschiebbaren Zahnstange, einem die Zahnstange am Ausweichen von der Längsachse des Antriebs hindernden Führungselement, einem mit der Zahnstange ein Getriebe bildendes Zahnrad, einer vom Zahnrad angetriebenen Abtriebswelle, deren Rotationsachse zugleich die des Zahnrades ist, und einem durch eine Kupplung mit der Abtriebswelle verbundenen Schwenkarm für ein Schleuderrad des Schleuderkettenaggregates.

Als Schleuderkettenaggretage bekannte Gleitschutzvorrichtungen für Kraftfahrzeuge sind im Stand der Technik vielfach beschrieben. Sie bilden einen im wesentlichen bei Lastkraftwagen eingesetzten Winterfahrschutz, der bei Bedarf vom Fahrer aus einschaltbar ist und die Traktion zwischen den Antriebsrädern und der Fahrbahn deutlich verbessert.

Ein zuschaltbarer Winterfahrschutz ist insbesondere bei Nutzfahrzeugen angenehm, weil sich ihr Aktionsbereich während der Winterzeit regelmäßig sowohl über schneereiche als auch über schneefreie Gebiete erstreckt und beim Betrieb mit herkömmlichen Schneeketten eine sehr häufige Montage und Demontage nötig ist, die die Transportzeiten verlängert.

Schleuderkettenaggregate, wie sie beispielsweise in der DE-A 3 100 975 beschrieben sind, besitzen eine Schwenkvorrichtung, bestehend aus einem Schwenkarm, an dem drehbar ein mit Kettensträngen besetztes Schleuderrad gelagert ist, und aus einem Antrieb, der den Schwenkarm wahlweise in eine von zwei Stellungen verschwenkt, in deren einer das Schleuderrad zur Mitnahme durch das Fahrzeug gegen dessen fahrzeuginnenseitige Seitenwand vorgespannt ist und in deren anderer das Schleuderrad in einer vom Fahrzeugrad abgehobenen Position steht, in der die Kettenstränge die Fahrbahn nicht berühren. Als Antrieb für die Schwenkvorrichtung dient gemäß der DE-A 3 100 975 ein Pneumatikzylinder mit einem Kolben. Der Zylinder stützt sich dabei an einem fahrzeugfesten Teil ab, während der Kolben kurbeltriebartig an dem Schwenkarm angreift, der gelenkig mit dem Fahrzeug verbunden ist.

Nachteilig bei einer derartigen Konstruktion kann ihr Platzbedarf werden, der nicht immer zu befriedigen ist. Insbesondere bei luftgefederten Fahrzeugen ist der benötigte Platz häufig nicht vorhanden, wodurch die Verwendung von Schleuderkettenaggregaten behindert wird.

Aus der US-A 2 283 948 ist ein Schleuderkettenaggregat bekannt, welches eine Schwenkvorrichtung der eingangs genannten Art aufweist. Bei dieser Schwenkvorrichtung wird eine Zahnstange mittels einer, gegebenenfalls mit einer Rückstellfeder verbundenen Antriebsstange hin- und herbewegt. Die Zahnstange greift in ein Zahnrad ein, welches über die Abtriebswelle den Schwenkarm bewegt. Die einzige Führung für die Zahnstange besteht in einem ihre Außenkontur eng umschließenden Gehäuse, welches auch das Zahnrad aufnimmt. Da die Zahnstange praktisch nur durch das Gehäuse geführt wird, ist eine aufwendige, maßgenaue Bearbeitung von Zahnstange und Gehäuse erforderlich, um ein Verklemmen der Zahnstange sowie Eingriffsfehler mit dem Zahnrad zu vermeiden. Außerdem erzwingt diese Führung der Zahnstange eine sehr platzgreifende Betätigungsvorrichtung. Bei luftgefederten und insbesondere bei kleineren Fahrzeugen wie Kleintransportern und Personenkraftwagen kann diese bekannte Schwenkvorrichtung wegen ihres hohen Platzbedarfes nicht eingesetzt werden.

Aufgabe der Erfindung ist es daher, eine unaufwendige, kompakte und daher platzsparende Schwenkvorrichtung vorzuschlagen.

Die Verwendung eines Zahnstangen/Zahnrad-Antriebes anstelle eines Pneumatikzylinders mit Kolben schafft die Voraussetzung dafür, eine sehr kompakte und platzsparende Schwenkvorrichtung in unaufwendiger Weise zu realisieren.

Bereits geringfügige Längsbewegungen der Zahnstange bewirken eine relativ große Winkeldrehung des Zahnrades und damit auch der Abtriebswelle und des Schwenkarms. Dadurch kann die Gesamtausdehnung der Schwenkvorrichtung in Längsrichtung der Zahnstange kleiner gehalten werden als bei Verwendung eines Pneumatikzylinders. Der Antrieb selbst kann direkt in Längsrichtung der Zahnstange wirken, so daß der Schwenkarm das einzige Teil ist, das seine Winkelstellung zum Rest der Schwenkvorrichtung ändert.

Zur Lösung der Aufgabe wird erfindungsgemäß die eingangs genannte Schwenkvorrichtung mit Zahnstangen/Zahnrad-Antrieb so ausgestaltet, daß als Führungselement eine Führungsstange aus Rundmaterial vorgesehen ist, die sich parallel und beabstandet zur Zahnstange erstreckt und die Zahnstange führt, daß die Zahnstange mit einer Längsführung an der Führungsstange angebracht ist und die Zähne der Zahnstange auf der von der Führungsstange abgewandten Seite vorgesehen sind und daß das Zahnrad die Zahnstange gegen ein seitliches Verschwenken um die Führungsstange abstützt.

Eine derartige Lagerung ist besonders einfach herzustellen. Zahnstange und Zahnrad stützen sich dann gegenseitig an den Zahnflanken ab und verhindern ein Verdrehen der Zahnstange. Besonders vorteilhaft ist es dabei, wenn die Zahnstange einen rechteckigen Querschnitt mit vergleichsweise großer Zahnbreite besitzt. Die Abstützung erfolgt dann über eine große Fläche der Zahnflanken.

Vorteilhaft ist es, wenn die Zahnstange mittels eines Federelementes gegen den Antrieb vorgespannt ist. Dieses Federelement erübrigt dann einen in zwei Richtungen wirkenden Antrieb, wodurch dieser besonders preiswert ausgebildet werden kann.

Als Federelement eignet sich insbesondere eine handelsübliche Gasdruckfeder, die entweder sich einerseits in einem dem ersten gegenüberliegenden zweiten Sackloch in der Zahnstange und andererseits an einem fahrzeugfesten Teil abstützt und mit Vorteil in dem zweiten Sackloch untergebracht ist, oder über eine Exzenteranlenkung mit der Abtriebswelle gekoppelt wird.

Ein besonders einfacher Antrieb entsteht in einer ersten Ausführungsform der Erfindung, wenn eine von dem Antrieb betätigte Schubstange mit der Zahnstange gekoppelt ist, insbesondere, wenn diese Schubstange in eine Bohrung der Zahnstange eingesteckt ist, welches in Axialrichtung der Zahnstange verläuft.

Der Antrieb, beispielsweise ein Druckluftzylinder, ein hydropneumatischer Zylinder, manuelle Hebelkraft, etc., wirkt auf die Schubstange, die ihrerseits die Zahnstange vorschiebt und so das Zahnrad dreht.

In einer zweiten bevorzugten Ausführungsform, die eine noch kompaktere Bauweise gestattet als die vorstehend genannte erste Ausführungsform, ist die Zahnstange an der Außenseite eines Zylinders festgelegt, der auf der Führungsstange verschieblich geführt ist. Der Zylinder ist an seinen Endabschnitten jeweils mit einer Dichtungs- und Führungsplatte versehen, die die Führungsstange dichtend umschließt. Eine Drehung des Zylinders samt Zahnstange um die Führungsstange herum wird durch den Eingriff der Zahnstange mit dem Zahnrad verhindert. Im Inneren des Zylinders ist vorzugsweise eine Festkolbenplatte vorgesehen, die dichtend von der Innenumfangsfläche der Zylinderwand umschlossen wird und so den Innenraum des Zylinders in zwei Arbeitskammern unterteilt.

Mit besonderem Vorteil dient bei dieser Ausführungsform die Führungsstange gleichzeitig als Zuführorgan für ein Fluid, mit dem Zylinder längs der Führungsstange bewegt werden kann, wobei er die Zahnstange verschiebt und dadurch das Zahnrad dreht. Die Führungsstange weist zwei sich von ihren gegenüberliegenden Enden her axial in sie hinein erstreckende Bohrungen auf, die mit seitlichen Öffnungen jeweils in einer Arbeitskammer münden. Bei Zuführung von Fluid in eine Arbeitskammer wird die Dichtungs- und Führungsplatte, die diese Arbeitskammer begrenzt, von der Festkolbenplatte fortgeschoben. Dabei vergrößert sich die entsprechende Arbeitskammer, während sich die andere Arbeitskammer entsprechend verkleinert und das in ihr enthaltende Fluid über die andere Bohrung abgibt.

Da bei dieser Ausführungsform alle Betätigungsorgane (bis auf Zuleitungsschläuche für das Fluid) auf kleinstem Raume im Gehäuse untergebracht sind, wird eine Schwenkvorrichtung größtmöglicher Kompaktheit geschaffen, die auch bei sehr ungünstigen Platzverhältnissen noch leicht am Fahrzeug vorgesehen werden kann.

Bei dieser Ausführungsform wird das Federelement vorzugsweise an einem Scheibenelement angelenkt, das auf der Abtriebswelle sitzt. Insbesondere bei Verwendung einer Gasdruckfeder als Federelement ergibt sich dann die Möglichkeit, die Betätigungsstange der Gasdruckfeder in randnaher, exzentrischer Position des Scheibenelementes so anzulenken, daß die Gasdruckfeder etwa auf der halben Hubstrecke des Zylinders ihren Totpunkt durchläuft, bei dem sie maximal eingeschoben ist. Dadurch wird beim Antrieb des Zylinders die Gasdruckfeder zunächst zusammengedrückt, im letzten Teil der Bewegungsbahn des Zylinders expandiert jedoch die Gasdruckfeder bereits wieder und unterstützt so die Zylinderbewegung. Gleichzeitig sorgt sie aber durch ihre gedämpfte, geschwindigkeitsbegrenzte Expansion dafür, daß der Zylinder nicht ruckartig in seine Endstellung gelangt. Dies verhindert Abnutzungserscheinungen und störende Geräuschbildung erheblich. Es versteht sich, daß die gleiche Wirkung bei der umgekehrten Hubbewegung des Zylinders eintritt.

Insbesondere wird ein Aufbau der Schwenkvorrichtung bevorzugt, bei dem das mit dem Federelement verbundene Scheibenelement zwischen zwei Zahnrädern auf der Abtriebswelle sitzt. Beide Zahnräder stehen mit der Zahnstange im Zahneingriff. In der Längsmitte der Zahnstange kann zur Aufnahme des über den Außenumfang der Zahnräder vorstehenden Scheibenelementes eine Längsausnehmung vorgesehen werden.

Diese Ausgestaltung ergibt einen hochsymmetrischen und besonders laufruhigen Aufbau. Sie ist zudem besonders leicht zu montieren. Das Scheibenelement wird im Gehäuse etwa in die gewünschte Position an der Zahnstange gebracht, woraufhin nur noch die Abtriebswelle durch das Scheibenelement hindurchgesteckt werden muß. Nachfolgend werden von den Seiten her die Zahnräder und dann Gehäuseelemente auf die Abtriebswelle aufgeschoben, die deren Endabschnitte lagern und am Gehäuse der Schwenkvorrichtung befestigt werden. Jetzt kann der Schwenkarm auf einen vorstehenden Kopplungsabschnitt der Abtriebswelle aufgesteckt und dort befestigt werden.

Auch die Verbindung von Federelement und Scheibenelement ist bei diesem Aufbau besonders leicht und sicher herzustellen. Dazu wird das Scheibenelement mit zwei Scheibensegmenten ausgebildet, die zwischen sich einen Bereich geringeren Durchmessers einschließen. In die entstehende Umfangsvertiefung kann die Betätigungsstange des Federelementes eintreten. Eine exzentrische Bohrung durchsetzt parallel zur Drehachse beide Scheibensegmente und nimmt einen kurzen Querbolzen auf, der im Einbauzustand beidseitig von den das Scheibenelement einschließenden Zahnrädern gehalten wird. Das Ende der Betätigungsstange des Federelementes wird dann durch eine Querbohrung des Bolzens gesteckt und gesichert. Der Zusammenbau dieser Elemente kann in einfachster Weise beim Einbau von Scheibenelement und Zahnrädern erfolgen.

Bei ungünstigen Einbauverhältnissen kann die Schwenkvorrichtung nicht beliebig orientiert angeordnet werden. In solchen Fällen ist es vorteilhaft, wenn die Kopplung zwischen Abtriebswelle und Schwenkarm ein Winkelgetriebe aufweist. Die Verwendung von Winkelgetrieben ist für andersartige Schwenkvorrichtungen bereits aus dem US-Patent 1 374 252 und dem De-Patent 266 487 bekannt. Dadurch wird es möglich, den Schwenkarm zwischen beliebigen gewünschten, vorbestimmten Richtungen zu schwenken. Mit Hilfe derartiger Winkelgetriebe können für linke und rechte Fahrzeugseite jeweils die gleichen Schwenkvorrichtungen verwendet werden. Wird das Winkelgetriebe nicht mit dem Gehäuse verschraubt, sondern mittels eines Klemmrings drehbar gesichert, so ist eine stufenlose Justierung und Anpassung an die jeweilige Einbausituation des betreffenden Fahrzeugs möglich.

Im folgenden werden bevorzugte Ausführungsformen der Erfindung anhand der Zeichnungen im einzelnen beschrieben. Es zeigen:

Fig. 1 eine teilweise geschnittene Seitenansicht einer ersten Ausführungsform einer Schwenkvorrichtung;

Fig. 2 eine Stirnansicht der Schwenkvorrichtung gemäß Fig. 1;

Fig. 3 eine der Fig. 1 ähnliche Ansicht einer Abwandlung der Schwenkvorrichtung;

Fig. 4 eine der Fig. 2 entsprechende Darstellung der Ausführungsform gemäß Fig. 3;

Fig. 5 einen Querschnitt durch die Achse der Abtriebswelle einer weiteren Abwandlung der Schwenkvorrichtung;

Fig. 6 eine Längs-Schnittansicht einer zweiten Ausführungsform einer Schwenkvorrichtung und

Fig. 7 einen Querschnitt durch die Achse der Abtriebswelle der Schwenkvorrichtung gemäß Fig. 6.

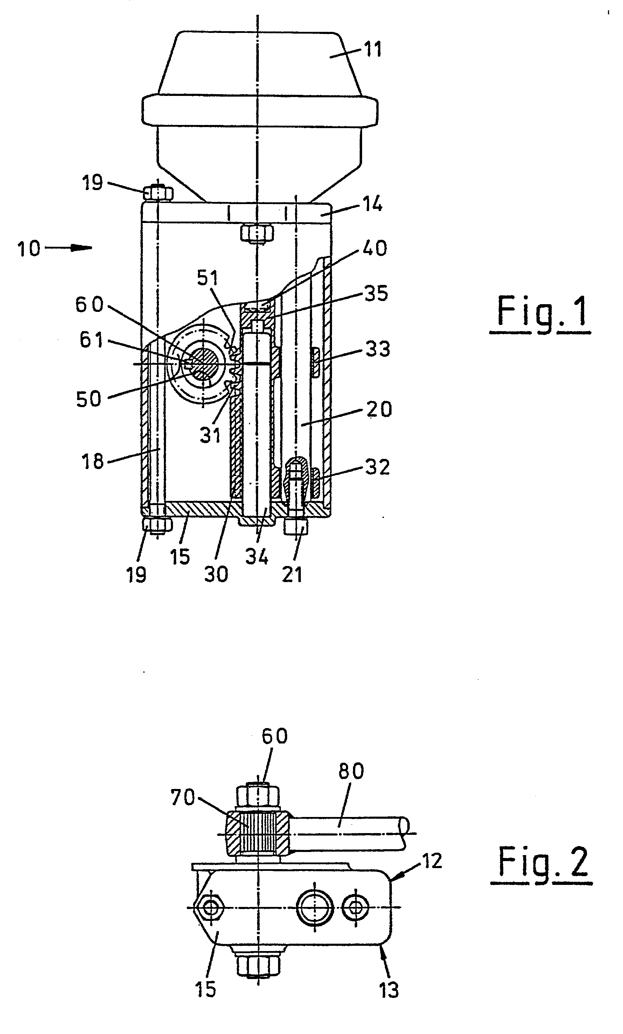

Die erste Ausführungsform der Schwenkvorrichtung weist gemäß den Fig. 1 - 5 ein ungefähr quaderförmiges Gehäuse 10 mit zwei zueinander symmetrischen Schalenteilen 12, 13 und zwei im wesentlichen flachen Stirnplatten 14, 15 auf. Auf der Stirnplatte 14 ist ein Antrieb 11 in Form eines Pneumatik-Zylinders angeordnet.

Im Gehäuse 10 sind parallel zueinander und senkrecht zu den Stirnplatten 14, 15 eine Führungsstange 20, eine Zahnstange 30 und eine Zugstange 18 angeordnet. Letztere ragt durch beide Stirnplatten 14, 15 und spannt mittels Muttern 19 die Stirnplatten gegen die Schalenteile des Gehäuses 10. Die Führungsstange 20 ist mittels Schrauben 21, von denen nur eine sichtbar ist und die in Gewindebohrungen an den Enden der Führungsstange 20 eingeschraubt sind, an den Stirnplatten 14, 15 des Gehäuses 10 unbeweglich befestigt.

Die Zähne 31 der im Querschnitt quadratischen oder rechteckigen Zahnstange 30 befinden sich auf der der Führungsstange 20 abgewandten Seite. Auf der der Führungsstange 20 zugewandten Seite der Zahnstange 30 stehen zwei ringförmige Ansätze 32, 33 radial ab. Der Ansatz 32 ist am in der Zeichnung unteren, dem Antrieb 11 gegenüberliegenden Ende der Zahnstange 30 und der Ansatz 33 etwa in der Mitte der Zahnstange 30 angeordnet. Die Ansätze 32, 33 sind achsparallel zur Zahnstange 30 durchbohrt und ausgebuchst. Die so gebildeten Bohrungen fluchten miteinander und werden von der Führungsstange 20 durchsetzt. Dadurch wird die Zahnstange 30 fliegend auf der Führungsstange 30 längsverschiebbar gelagert.

Von beiden Enden der Zahnstange 30 erstrecken sich axial Sacklöcher ins Innere derselben, die durch einen Steg 35 voneinander getrennt sind. In den dargestellten, bevorzugten Ausführungsbeispielen ist der Steg 35 sehr dünn ausgebildet.

In dem einen, dem Antrieb 11 zugewandten Sackloch der Zahnstange 30 endet eine Schubstange 40, die beispielsweise eine Kolbenstange eines Pneumatikzylinders im Antrieb 11 sein kann. Die Schubstange 40 verläuft axial und stützt sich am Steg 35 ab.

Das andere Sackloch nimmt ein Federelement in Form einer Gasdruckfeder 34 auf, die sich einerseits am Steg 35 und andererseits an der Stirnplatte 15 des Gehäuses 100 abstützt.

Die Zähne 31 der Zahnstange 30 kämmen mit einem Zahnrad 50, dessen Achse senkrecht zu den Stangen 20, 30 steht. Zähne 51 des Zahrades 50 greifen in die Zähne 31 der Zahnstange 30 eine und bildet mit ihnen gemeinsam ein Getriebe.

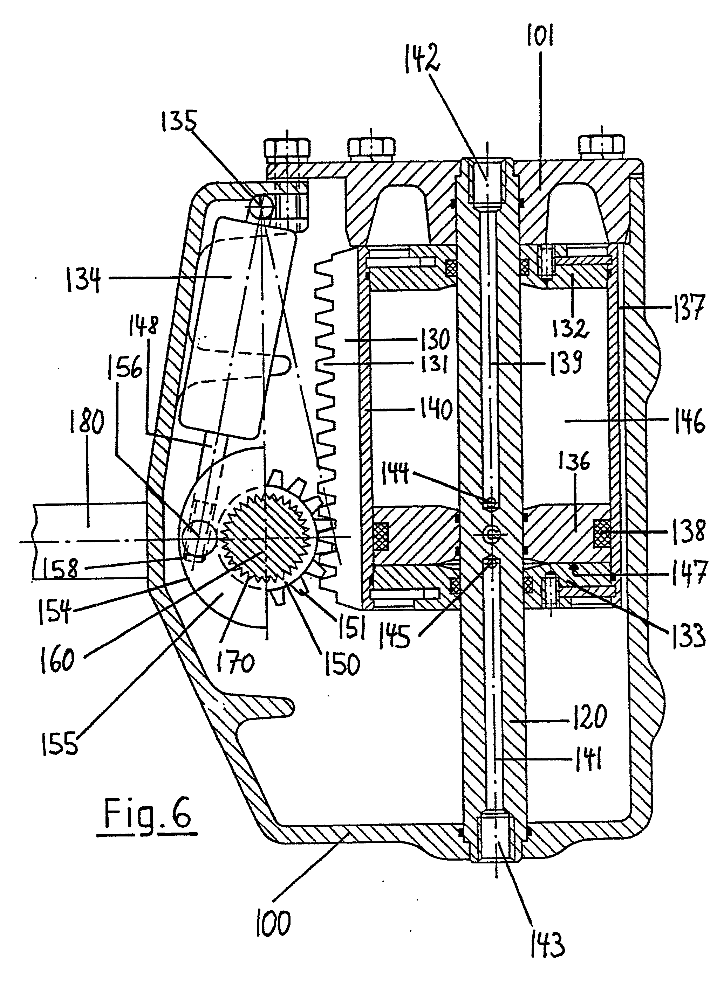

Eine Abtriebswelle 60 is in den Schalenteilen 12, 13 des Gehäuses 10 beispielsweise durch Rollenlager 62 gelagert (vergl. die größere Darstellung der Ausführungsform nach Fig. 5, die insoweit mit den Fig. 1 - 4 übereinstimmt). Die Abtriebswelle 60 trägt das Zahrad 50. Sie ist mittels eines Keils 61 formschlüssig mit dem Zahrad 50 verbunden. Ein Ende der Abtriebswelle 60 ragt aus dem Gehäuse 10 heraus. Ein Schwenkarm 80 ist dort auf die Abtriebswelle 60 aufgesteckt, zu der er senkrecht steht (nur Ausführungsbeispiel der Fig. 1 und 2).

Eine Kopplung 70 verbindet die Abtriebswelle 60 mit dem Schwenkarm 80. Sie besteht aus einer Verzahnung.

Nicht dargestellt ist das freie Ende des Schwenkarms 80, an dem der Schleuderteller mit den Kettensträngen des Schleuderkettenaggregates befestigt ist.

Die Montage einer derartigen Vorrichtung ist denkbar einfach. In der unteren Schale 13 wird zunächst die Lagerung des Zahrades 50 vorgenommen. Der Antrieb 11 und die zugewandte Stirnplatte 14 werden eingesetzt. Die obere Schale 12, durch die sich die Abtriebswelle 60 erstreckt, wird aufgesetzt. Durch die noch verbliebene offene Seite werden jetzt die Führungsstange 20 und die Zahnstange 30 eingeschoben, wobei lediglich grob darauf zu achten ist, daß die Schubstange 40 in das Sackloch der Zahnstange 30 gelangt. Die Gasdruckfeder 34 wird in das zweite Sackloch eingeführt und die Zugstange 18 eingesetzt. Schließlich wird mit der Stirnplatte 15 die einzige noch verbliebene offene Seite des Gehäuses 10 geschlossen und die Stirnplatte 15 mittels der Schrauben 21 und der Muttern 19 gesichert. Nach Aufsetzen des Schwenkarms 80 auf die Abtriebswelle 60 ist die Schwenkvorrichtung einbaufertig.

Die Schwenkvorrichtung wird für die beiden Seiten des Fahrzeugs in jeweils spiegelbildlicher Anordnung benötigt. Beide Anordnungen lassen sich mit der beschriebenen Ausführungsform und mit den gleichen Teilen verwirklichen. Es ist hierzu erforderlich, daß die beiden Stirnplatten 14, 15 jeweils so ausgeführt sind, daß sie zu einer zu der Abtriebswelle 60 senkrechten Ebene spiegelbildlich sind. Dann entsteht nämlich die jeweils für die andere Fahrzeugseite benötigte Schwenkvorrichtung einfach dadurch, daß die beiden Stirnplatten ausgetauscht, der Antrieb 11 mit der Schubstange 40 auf der anderen Seite des Gehäuses 10, allerdings nach wie vor auf der Stirnplatte 14 befestigt und die Zahnstange 34 andersherum eingebaut wird.

Der Betrieb der Schwenkvorrichtung verläuft folgendermaßen:

In ihrer Grundstellung ist die Schubstange 40 zurückgezogen und die Gasdruckfeder 34 weitgehend entspannt. Die ringförmigen Ansätze 32, 33 der Zahnstange 30 befinden sich dann in einer Stellung oberhalb der in Fig. 1 angedeuteten Position.

Zum Schwenken des Schwenkarms 80 wird jetzt der Antrieb 11 eingeschaltet. Er schiebt die Schubstange 40 vor, diese übt Kraft auf den Steg 35 und damit auf die Zahnstange 30 aus und preßt so die Gasdruckfeder 34 zusammen. Diese Bewegung erfolgt, bis die in Fig. 1 dargestellte Stellung erreicht ist. Die Zähne 31 der Zahnstange 30, die dabei mit den Zähnen 51 des Zahnrades 50 Eingriff stehen, werden in Fig. 1 ebenfalls nach unten bewegt und drehen so das Zahnrad 50 im Uhrzeigersinn. Dadurch dreht sich auch die Abtriebswelle 60 im Uhrzeigersinn und der Schwenkarm 80 wird in Fig. 2 nach vorn geschwenkt.

Um die Schwenkvorrichtung wieder in ihre Grundstellung zu bringen, wird der Antrieb 11 ausgeschaltet, die Kraft auf den Steg 35 läßt nach und die Gasdruckfeder 34 schiebt die Schubstange 40 samt der Zahnstange 30 nach oben (in Fig. 1) und dreht so das Zahnrad 50 im Gegenuhrzeigersinn. Entsprechend wird die Abtriebswelle 60 gedreht und der Schwenkarm 80 wird (in Fig. 2) nach hinten geschwenkt.

Es sei an dieser Stelle hervorgehoben, daß für die beschriebene Schwenkvorrichtung nur wenige Oberflächen bearbeitet werden müssen. Die Sacklöcher in der Zahnstange 30 können z.B. durch einen Gußvorgang hergestellt werden. Die Ansätze 32, 33 können relativ einfach ausgebildet sein und brauchen nur ausgebuchst zu sein, um auf der Führungsstange 20 leicht verschiebbar zu sein. Auch für die Zähne 31 und 51 von Zahnstange 30 und Zahnrad 50 ist keine Präzisionsbearbeitung erforderlich. Da die gesamte Schwenkvorrichtung sehr leichtgängig ist, können relativ kleine Antriebszylinder bzw. schwache Antriebsaggregate verwendet werden.

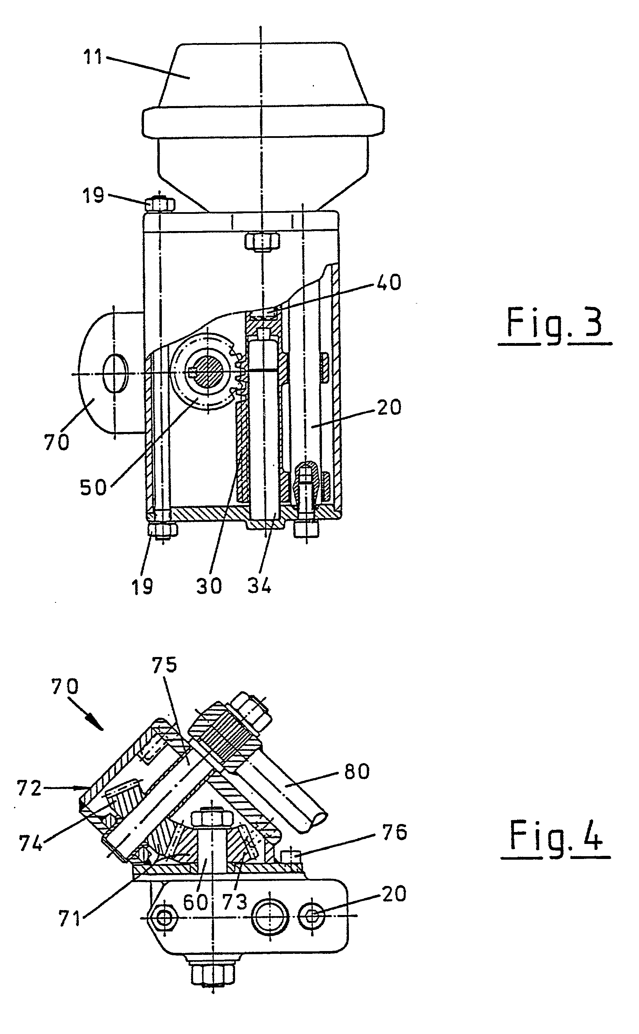

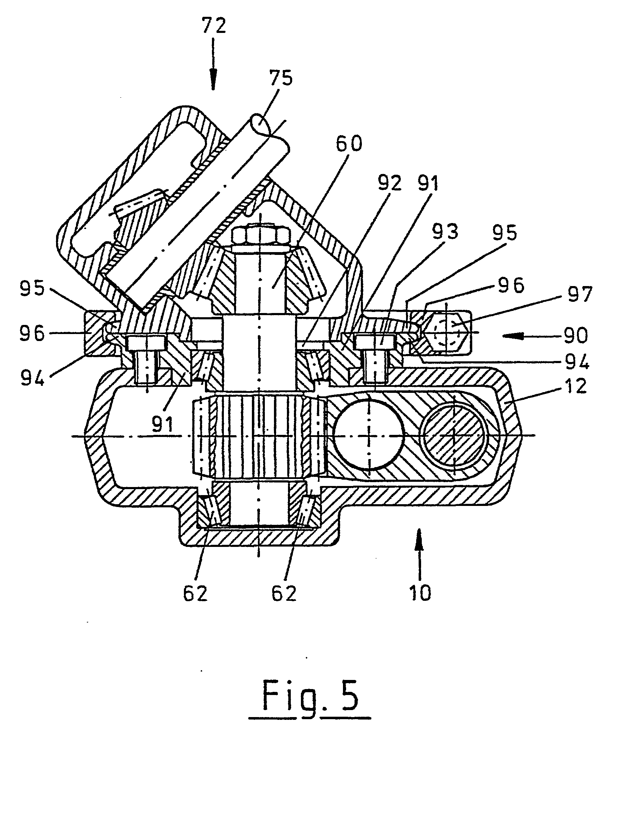

Eine in den Fig. 3 und 4 dargestellte Abwandlung der ersten Ausführungsform entspricht der gemäß Fig. 1 und 2 weitgehend. Zwischen Abtriebswelle 60 und Schwenkarm 80 ist hier als Kopplung 70 ein Winkelgetriebe 71 eingefügt.

Auf dem Gehäuse 10 sitzt auf der Seite, auf der die Abtriebswelle 60 austritt, ein Gehäuse 72, in dem das Winkelgetriebe 71 angeordnet ist. Das Gehäuse 72 ist mittels Schrauben 76 auf dem Gehäuse befestigt. Das Winkelgetriebe 71 besteht aus zwei Kegelrädern 73, 74 und einer Zusatzwelle 75. Die Abtriebswelle 60 trägt das erste Kegelrad 73. Die Zusatzwelle 75 steht in einem vorgegebenen Winkel zu der Abtriebswelle 60 und ist mit einem Ende drehbar im Gehäuse 72 gelagert. Sie trägt das zweite Kegelrad 74. Die beiden Kegelräder 73 und 74 kämmen miteinander. Ein Ende der Zusatzwelle 75 ragt aus dem Gehäuse 72 heraus. Der Schwenkarm 80 ist dort auf die Zusatzwelle 75 aufgesteckt.

In Fig. 5 ist im größeren Maßstab eine weitere Abwandlung der ersten Ausführungsform dargestellt, die der in den Fig. 3 und 4 weitgehend ähnelt. Sie weist wie diese ein Gehäuse 72 für das Winkelgetriebe 71 auf. Das Gehäuse 72 wird hier jedoch nicht mittels Bolzen, sondern mittels einer Klemmvorrichtung 90 an dem Gehäuse 10 gehalten.

Ein Ringflansch 91 mit einer zentralen Öffnung 92 ist mittels Senkschrauben 93 fest dem Schalenteil 12 des Gehäuses 10 verschraubt. Die Abtriebswelle 60 ragt durch die Öffnung 92 hindurch. Der Ringflansch 91 besitzt an seinem dem Gehäuse 10 abgewandten Ende einen radial vorspringenden Rand 94 mit umlaufender Keilfläche.

Auch das Gehäuse 72 besitzt auf seiner dem Gehäuse 10 zugewandten Seite einen entsprechend umlaufenden und komplementären Ringflansch 95. Mit üblichen Mitteln ist dafür gesorgt, daß der Ringflansch 91 gegenüber der Abtriebswelle 60 im Gehäuse 10 und der andere Ringflansch 95 zum Ringflansch 94 zentriert ist. Ausweislich Fig. 5 weist auch der Ringflansch 95 eine umlaufende Keilfläche auf.

Ein radial innen umlaufend keilförmig genuteter Klemmring 96 übergreift die komplementären Keilflächen der Ringflansche 91, 95. Er ist radial geschlitzt und wird zum Aneinanderpressen der Ringflansche mittels einer Schraube 97 gespannt.

Vor dem Einbau am Fahrzeug wird der Klemmring 96 soweit gelockert, daß sich das Gehäuse 72 gegenüber dem Ringflansch 91 drehen läßt. Jetzt kann das Gehäuse 72 mitsamt Zusatzwelle 75 und Schwenkarm 80 relativ zum Gehäuse 10 und zum Antrieb 11 stufenlos verdreht werden, bis die gewünschte Winkelstellung erreicht ist. Dann wird der Klemmring 96 mittels der Schraube 97 wieder festgezogen und sichert so die eingestellte Position der Teile.

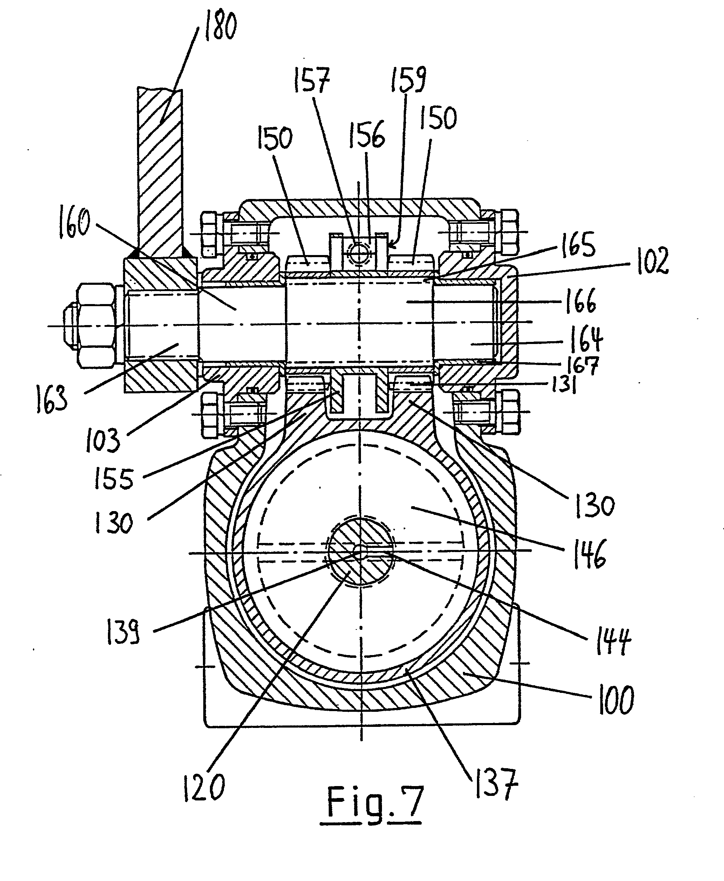

Die in Fig. 6 und 7 gezeigte zweite Ausführungsform der Schwenkvorrichtung umfaßt ein Gehäuse 100, durch das sich eine Führungsstange 120 erstreckt. An einer Seite weist das Gehäuse 100 eine größere Öffnung auf, die durch ein mit dem Gehäuse 100 verschraubtes Gehäuseelement 101 verschlossen wird. Die Öffnung und das sie verschließende Gehäuseelement 101 dienen zum Einbau eines Teils der die Schwenkvorrichtung bildenden Bauteile.

Die Führungsstange 120 hat kreisförmigen Querschnitt und ist im Einbauzustand in zwei Durchgangs-Bohrungen des Gehäuses 100 bzw. des Gehäuseelements 101 gehalten. Von den Enden her erstreckt sich jeweils eine Sackbohrung 139, 141 bis nahe zur Längsmitte der Führungsstange axial in diese hinein. Am Grund jeder Sackbohrung 139, 141 ist je eine Querbohrung 144, 145 vorgesehen, die sich vom Umfang der Führungsstange 120 her in die Sackbohrung erstreckt. Die Sackbohrungen 139, 141 dienen als Zu- und Abführkanäle für ein Fluid, welches von an den Enden der Führungsstange 120 gelegenen Anschlüssen 142, 143 her durch die Kanäle 139, 141 und die Bohrungen 144, 145, oder in umgekehrter Richtung, geführt wird.

Auf der Führungsstange 120 ist ein Zylinder 137 geführt, der in Längsrichtung der Führungsstange 120 auf dieser verschieblich ist. Der Zylinder 137 umfaßt eine rohrstückartige Zylinderwand 140 und an deren jeweiligen axialen Enden dichtend befestigte Dichtungs- und Führungsplatten 132, 133. Die Dichtungs- und Führungsplatten 132, 133 sind jeweils im Mittelbereich durchbohrt und auf die Führungsstange 120 aufgeschoben, die diese Bohrungen durchsetzt. Auch gegenüber der Führungsstange 120 sind die Dichtungs- und Führungsplatten 132, 133 gedichtet.

Die Zylinderwand 140 und die Dichtungs- und Führungsplatten 132, 133 umschließen einen Innenraum des Zylinders 137, der durch eine Festkolbenplatte 136 in zwei Arbeitskammern 146, 147 unterteilt ist. Die Festkolbenplatte 136 ist unverschieblich an der Führungsstange 120 angeordnet und liegt zwischen den Bohrungen 144, 145 der Zu- und Abführkanäle 139, 141. Das Außenumfangsprofil der Festkolbenplatte 136 entspricht im wesentlichen dem Innenumfangsprofil der Zylinderwand 140; eine in den Außenumfang der Festkolbenplatte 136 eingelassene Ringdichtung 138 dichtet diese gegen die Zylinderwand 140 und damit die eine Arbeitskammer 146 gegen die andere Arbeitskammer 147 ab. Der Weg, über den sich der Zylinder 137 entlang der Führungsstange 120 verschieben läßt, ist durch die Anlage einer jeweiligen Dichtungs- und Führungsplatte 132 oder 133 an der Festkolbenplatte 136 begrenzt; in dieser Stellung ist die eine der Arbeitskammern 146, 147 von maximaler Größe, während die jeweils andere Arbeitskammer nur noch ein minimales Restvolumen aufweist. Wird der Zylinder 137 aus dieser Stellung verschoben, so verringert sich das Volumen der genannten, maximal großen Arbeitskammer in dem Maße, wie das der genannten, maximal kleinen Arbeitskammer sich vergrößert.

An der Zylinderwand 140 ist außenseitig eine Zahnstange 130 befestigt oder integral angeordnet, deren Zähne 131 auf der von der Zylinderwand 140 abgewandten Seite liegen.

Wie Fig. 7 zeigt, ist die Zahnstange 130 zur Bildung einer mittigen Längsausnehmung axial genutzt, so daß die Zahnung 131 nur jeweils an den Längsseiten der Zahnstange 130 vorgesehen ist. Dadurch entstehen zwei in Längsrichtung nebeneinander liegende Zahnreihen.

Statt wie in der obenbeschriebenen ersten Ausführungsform sind bei dieser zweiten Ausführungsform nicht ein Zahnrad, sondern zwei im wesentlichen gleiche Zahnräder 150 vorgesehen, deren Zähne 151 jeweils in eine der Zahnreihen der Zahnstange 130 eingreifen.

Die Zahnräder 150 sind auf eine Abtriebswelle 160 aufgeschoben und haben dadurch eine gemeinsame Drehachse. Durch eine Verzahnung 170 wird eine drehfeste Verbindung der Zahnräder 150 mit Abtriebswelle 160 sichergestellt. Zwischen den Zahnrädern 150 liegt ein Scheibenelement 154, das koaxial mit den Zahnrädern 150 und der Abtriebswelle 160 angeordnet ist und durch die Verzahnung 170 drehfest mit der Abtriebswelle 160 verbunden ist.

Das Scheibenelement 154 besteht aus zwei in Axialrichtung aufeinander folgenden Scheibensegmenten 155 etwa gleichen Umfanges und einem zwischen diesen liegenden Abschnitt geringeren Umfanges (vgl. besonders Fig. 7). Das Scheibenelement 154 wird beispielsweise aus einer Ringscheibe hinreichender axialer Länge dadurch erzeugt, daß etwa auf halber axialer Länge vom Umfang her eine Ringnut in die Scheibe eingeschnitten wird, zu deren beiden Seiten dann die Scheibensegmente 155 stehenbleiben.

Das Scheibenelement 154 weist nahe seinem Umfang eine durch beide Scheibensegmente 155 durchgehende, parallel zur Drehachse des Scheibenelementes 154 verlaufende Bohrung 159 auf. Diese Bohrung 159 dient, wie später noch ausführlicher beschrieben werden wird, zur Aufnahme eines Bolzens 156.

Die Abtriebswelle 160 ist mit einem Endabschnitt 164 mittels einer Buchse 167 in einem kappenartigen Gehäuseelement 102 gelagert, welches den Endabschnitt 164 am Umfang umschließt und stirnseitig abdeckt. Das Gehäuseelement 102 ist in eine entsprechende Öffnung des Gehäuses 100 eingesetzt und mit diesem verschraubt. Auf der gegenüberliegenden Seite des Gehäuses 100 ist ein ähnliches Gehäuseelement 103 vorgesehen, welches die Abtriebswelle 160 unter Zwischenschaltung einer Buchse umschließt und ebenfalls am Gehäuse 100 verschraubt ist. Durch dieses Gehäuseelement 103 tritt der andere Endabschnitt 163 der Abtriebswelle 160 aus dem Gehäuse vor. Auf diesem Endabschnitt 163 ist ein Schwenkarm 180 drehfest aufgeschoben und durch eine Mutter gesichert.

Wie Fig. 6 zeigt, befindet sich im Gehäuse 100 weiterhin eine Gasdruckfeder 134, die mittels eines Bolzens 135 schwenkbar an der Innenseite des Gehäuses 100 gelagert ist. Die Gasdruckfeder 134 ist mit einer Betätigungsstange 148 versehen, die unter der Dämpfungs- und Federwirkung der Gasdruckfeder 134 herausgezogen und hineingeschoben werden kann.

Das verjüngte freie Ende der Betätigungsstange 148 ist durch eine Querbohrung 157 des Bolzens 156 gesteckt und an seinem freien Ende, etwa mittels eines Halteringes 158 gegen ein Herausrutschen gesichert.

Zur Montage dieser Schwenkvorrichtung wird zunächst die Festkolbenplatte 136 auf der Führungsstange 120 befestigt und dann der Zylinder 137 durch Festlegung der Dichtungs- und Führungsplatten 132 und 133 an der Zylinderwand 140 um die Festkolbenplatte 136 herum zusammengebaut. Die Zahnstange 130 ist im gezeigten Ausführungsbeispiel einstückig mit der Zylinderwand 140 ausgebildet, kann aber auch als separates Teil an dieser befestigt werden; diese Befestigung wäre dann vorzugsweise vor Einbau von Führungsstange 120 und Zylinder 137 in das Gehäuse 100 vorzunehmen.

Nun wird die Anordnung aus Führungsstange 120 und Zylinder 137 durch die dafür vorgesehene Öffnung in das Gehäuse 100 eingeführt und die Führungsstange 120 mit ihrem einen Ende in die dafür vorgesehene Bohrung des Gehäuses 100 eingesetzt. Nachfolgende Anbringung des Gehäuseelementes 101 und der Aufnahme des anderen Endes der Führungsstange 120 in die entsprechende Bohrung vervollständigt diesen Aufbauschritt.

Jetzt wird der Bolzen 156 durch die Bohrung 159 des Scheibenelementes 154 gesteckt. Das Scheibenelement 154 wird anschließend durch eine der verbliebenen Öffnungen des Gehäuses 100 in seine Stellung gebracht, in welcher das Scheibenelement 154 in der Längsausnehmung der Zahnstange 130 liegt. Dann kann die Abtriebswelle 160 so in die mittige axiale Öffnung des Scheibenelementes 154 eingeschoben werden, daß die vorgesehene Zahnung einen drehfesten Eingriff bewirkt. Die Zahnräder 150 werden dann jeweils von einem Ende der Abtriebswelle 160 her aufgeschoben, bis die am Scheibenelement 154 anliegen. In dieser Stellung verhindern die dem Scheibenelement 154 jeweils zugewandten Stirnseiten der Zahnräder 150, daß der Bolzen 156 sich aus der Bohrung 159 des Scheibenelementes 154 in axialer Richtung herausbewegen kann.

Nachfolgend müssen nur noch die Gasdruckfeder 134 eingesetzt und die Gehäuseelemente 102, 103 auf die Abtriebswelle 160 aufgeschoben und am Gehäuse 100 verschraubt werden. Jetzt kann der Schwenkarm 180 auf der Abtriebswelle 160 befestigt werden, was den Zusammenbau der Schwenkvorrichtung vervollständigt.

Der Betrieb dieser Ausführungsform der Schwenkvorrichtung wird im folgenden ausgehend von Fig. 6 beschrieben. Im Ausgangszustand befindet sich der Zylinder 137 in seiner einen (in Fig. 6 oberen) Grenzstellung; die Arbeitskammer 146 ist fluidgefüllt und weist ihr maximales Volumen auf. Die andere Arbeitskammer 147 ist fluidentleert und weist ihr minimales Volumen auf.

Die Gasdruckfeder 134 beaufschlagt über die teilweise ausgefahrene Betätigungsstange 148 das Scheibenelement 154 und damit die Abtriebswelle 160 in einer Richtung, die den in Fig. 6 horizontal stehenden Schwenkarm 180 in Abwärtsrichtung verschwenken würde. Diese Verschwenkung ist jedoch wegen des Zahneingriffes der Zahnräder 150 mit der Zahnstange 130 nicht möglich, da der Zylinder 137 in der Endstellung seines dieser Schwenkbewegung entsprechenden Arbeitshubes steht. Die Festkolbenplatte 136 verhindert eine weitere Bewegung des Zylinders 137 in dieser Richtung; zusätzlich ist eine solche Bewegung auch durch in Fig. 6 gezeigte Vorsprünge des Gehäuseelementes 101 unterbunden.

Jetzt wird über den Anschluß 143 und den Zu- und Abführkanal 141 der Führungsstange 120 ein Fluid unter Druck zugeführt, welches durch die Bohrung 145 in die entleerte Arbeitskammer 147 eintritt. Durch den sich aufbauenden Druck wird die untere Dichtungs- und Führungsplatte 133 des Zylinders 137 von der Festkolbenplatte 136 weggedrängt. Der Zylinder 137 bewegt sich dadurch nach unten in Fig. 6, auf den Anschluß 143 zu. Gleichzeitig wird das in der nicht druckbeaufschlagten Arbeitskammer 146 enthaltende Fluid über die Bohrung 144 und den Zu- und Abführkanal 139 herausgedrängt und über den Anschluß 142 und ein geeignetes Ventil an die Umgebung abgegeben.

Bei dieser Abwärtsbewegung des Zylinders 137 verdreht die Zahnstange 130 die Zahnräder 150 und damit die Abtriebswelle 160. Der Schwenkarm 180 wird nach oben in Fig. 6 verschwenkt. Dies bewirkt je nach Einbaubedingungen das Heran- oder das Fortschwenken des Schleuderkettenaggregates an den Fahrzeugreifen heran, bzw. von diesem weg.

Bei dieser Bewegung wird die Betätigungsstange 148 in die Gasdruckfeder 134 hineingeschoben, wozu der Widerstand der Gasdruckfeder 134 überwunden werden muß. Etwa auf halbem Arbeitshub des Zylinders 137, d.h. wenn dieser seine Abwärtsbewegung zur Hälfte durchgeführt hat, ist die Betätigungsstange 148 maximal in die Gasdruckfeder 134 zurückgeschoben, wie die die Drehachse der Abtriebswelle 160 schneidende gestrichelte Linie in Fig. 6 andeutet. Bei weiterer Abwärtsbewegung des Zylinders 137 ist jetzt keine gegengerichtete Kraft der Gasdruckfeder 134 mehr zu überwinden; vielmehr wirkt die Federkraft der Gasdruckfeder 134 jetzt in die gleiche Richtung wie die Druckkraft des Zylinders 137. Jedoch bewirkt die Dämpfung der Gasdruckfeder 134, daß sich der letzte Teil der Zylinderbewegung nicht mehr wesentlich beschleunigt und statt dessen eine sanfte, gebremste Bewegung in die untere Endpunktstellung des Zylinders 137 erfolgt.

In dieser unteren Endpunktstellung des Zylinders 137 liegt die Betätigungsstange 148 der Gasdruckfeder 134 auf der in Fig. 6 gestrichelten Linie rechts des Zahnrades 150, und der Bolzen 156 sowie das freie Ende der Betätigungsstange 148 liegen innerhalb der Längsausnehmung der Zahnstange 130.

Da beide Endstellungen des freien Endes der Betätigungsstange 148 gleich weit vom gegenüberliegenden Anlenkpunkt 135 der Gasdruckfeder 134 entfernt sind, während die Stellung maximaler Federspannung der Gasdruckfeder 134 jeweils zwischen diesen Endstellungen durchschritten wird, entspricht diese Anbringung der Gasdruckfeder 134 einer Übertotpunkt-Arbeitsweise.

Die Rückstellung des Schwenkarmes 180 in seine in Fig. 6 gezeigte Position verläuft unter vollständig analoger Umkehr der obengenannten Arbeitsschritte. Der Anschluß 143 wird gegenüber der Umgebung geöffnet, der Anschluß 142 mit druckbeaufschlagtem Fluid verbunden. Während sich jetzt der Kolben 137 nach oben bewegt, vergrößert sich die Arbeitskammer 146 auf Kosten der Arbeitskammer 147, deren Fluidinhalt über den Zu- und Abführkanal 141 entweichen kann.

Die Gasdruckfeder 134 wird zunächst komprimiert, bis ihr Totpunkt erreicht ist; nachfolgend expandiert sie und bremst dabei gleichzeitig die Bewegung des Kolbens 137 zurück in die in Fig. 6 gezeigte Endstellung.

Es versteht sich, daß statt der direkten Anlenkung des Schwenkarmes 180 an der Abtriebswelle 160 auch in diesem Fall die bereits genannte Koppelung über ein Winkelgetriebe vorgesehen werden kann.

**Patentansprüche**

1. Schwenkvorrichtung für ein Schleuderkettenaggregat eines Kraftfahrzeuges, mit einem Antrieb, einer mittels des Antriebs längsverschiebbaren Zahnstange, einem die Zahnstange am Ausweichen von der Längsachse des Antriebs hindernden Führungselement, einem mit der Zahnstange ein Getriebe bildendes Zahnrad, einer vom Zahnrad angetriebenen Abtriebswelle, deren Rotationsachse zugleich die des Zahnrades ist, und einem durch eine Kopplung mit der Abtriebswelle verbundenen Schwenkarm für ein Schleuderrad des Schleuderkettenaggregates, dadurch gekennzeichnet, daß als Führungselement eine Führungsstange (20, 120) aus Rundmaterial vorgesehen ist, die sich parallel und beabstandet zur Zahnstange (30, 130) erstreckt und die Zahnstange führt, daß die Zahnstange mit einer Längsführung an der Führungsstange (20, 120) angebracht ist und die Zähne (31, 131) der Zahnstange (30, 130) auf der von der Führungsstange (20, 120) abgewandten Seite vorgesehen sind und daß das Zahnrad (50, 150) die Zahnstange (30, 130) gegen ein seitliches Verschwenken um die Führungsstange (20, 120) abstützt.

2. Schwenkvorrichtung nach Anspruch 1, dadurch gekennzeichnet, daß die Zahnstange (30, 130) mittels eines Federelementes (34, 134) entgegen der Antriebsrichtung vorgespannt ist.

3. Schwenkvorrichtung nach Anspruch 1 oder 2, dadurch gekennzeichnet, daß das Federelement eine Gasdruckfeder (34, 134) ist.

4. Schwenkvorrichtung nach einem der Ansprüche 1 bis 3, dadurch gekennzeichnet, daß die Zahnstange (30) auf ihrer von den Zähnen (31) abgewandten Seite wenigstens einen die Führungsstange (20) im Gleitsitz umgreifenden Ansatz (32, 33) aufweist.

5. Schwenkvorrichtung nach einem der Ansprüche 1 bis 4, dadurch gekennzeichnet, daß eine von dem Antrieb (11) betätigte Schubstange (40) mit der Zahnstange (30) gekoppelt ist.

6. Schwenkvorrichtung nach Anspruch 5, dadurch gekennzeichnet, daß die Schubstange (40) in eine Bohrung der Zahnstange (30) eingesteckt ist, welche in Axialrichtung der Zahnstange (30) verläuft.

7. Schwenkvorrichtung nach Anspruch 6, dadurch gekennzeichnet, daß die Bohrung zur Aufnahme der Schubstange (40) von einem ersten Sackloch der Zahnstange (30) gebildet wird und sich das Federelement (34) einerseits in einem, dem ersten Sackloch gegenüberliegenden zweiten Sackloch in der Zahnstange (30) und andererseits an einem fahrzeugfesten Teilabschnitt abstützt.

8. Schwenkvorrichtung nach Anspruch 7, dadurch gekennzeichnet, daß das Federelement (34) weitestgehend in dem zweiten Sackloch untergebracht ist.

9. Schwenkvorrichtung nach einem der Ansprüche 1 bis 3, dadurch gekennzeichnet, daß die Zahnstange (130) an der Außenseite eines auf der Führungsstange (120) verschieblich geführten Zylinders (137) festgelegt ist, der mit Zu- und Abführkanälen (139, 141) verbunden ist, durch die ein Fluid zur Betätigung des Zylinders (137) in diesen eingeführt werden kann.

10. Schwenkvorrichtung nach Anspruch 9, dadurch gekennzeichnet, daß der Zylinder (137) eine fest mit der Führungsstange (120) verbundene Festkolbenplatte (136) dichtend umschließt, die seinen Innenraum in zwei Arbeitskammern (146, 147) unterteilt, und der Zylinder (137) mit zwei jeweils in eine Arbeitskammer (146 oder 147) mündenden Zu- und Abführkanälen (139, 141) für das Betätigungsfluid verbunden ist.

11. Schwenkvorrichtung nach Anspruch 10, dadurch gekennzeichnet, daß die Zu- und Abführkanäle (139, 141) als axiale Bohrungen mit seitlichen Öffnungen in der Führungsstange (120) ausgebildet sind.

12. Schwenkvorrichtung nach einem der Ansprüche 9 bis 11, dadurch gekennzeichnet, daß das Federelement (134) exzentrisch mit dem Zahnrad (150) verbunden ist und zwischen beiden Endstellungen des Zylinders (137) eine Stellung maximaler Federspannung durchläuft.

13. Schwenkvorrichtung nach Anspruch 12, dadurch gekennzeichnet, daß auf der Abtriebswelle (160) zwei mit der Zahnstange (130) eingreifende Zahnräder (150) koaxial beabstandet angeordnet sind, zwischen denen ein ebenfalls koaxiales Scheibenelement (154) zu gemeinsamer Drehung vorgesehen ist, an welchem das Federelement (134) exzentrisch angelenkt ist.

14. Schwenkvorrichtung nach Anspruch 13, dadurch gekennzeichnet, daß die Abtriebswelle (160) mit einem Endabschnitt (164) einem lösbar am Gehäuse befestigten Gehäuseelement (102) gelagert ist und einen mit äußeren Eingreifvorrichtungen (165) versehenen Mittelabschnitt (166) aufweist, auf den die Zahnräder (159) und das Scheibenelement (154) drehfest eingreifend aufschiebbar sind.

15. Schwenkvorrichtung nach mindestens einem der vorstehenden Ansprüche, dadurch gekennzeichnet, daß die Zahnstange (30) im Querschnitt im wesentlichen rechteckförmig ist.

16. Schwenkvorrichtung nach mindestens einem der vorstehenden Ansprüche, dadurch gekennzeichnet, daß die Kopplung (70) zwischen Abtriebswelle (60) und Schwenkarm (80) ein Winkelgetriebe (71) aufweist.

17. Schwenkvorrichtung nach Anspruch 16, dadurch gekennzeichnet, daß das Winkelgetriebe (71) auf der Eingangsseite seines Gehäuses (72) einen die Achse der Abtriebswelle (60) konzentrisch umgebenden Ringflansch (95) mit umlaufender Keilfläche aufweist, daß an der Abtriebsseite des Gehäuses (10) der Schwenkvorrichtung ein entsprechender Ringflansch (91) mit umlaufender, komplementärer Keilfläche vorgesehen ist, und daß die beiden Ringflansche mittels eines Klemmringes (96) gegeneinander verspannbar sind.

**Claims**

1. Pivoting device for a centrifugal traction assembly of a vehicle, with a drive, with a toothed rack longitudinally displacable by means of the drive, with a guide element preventing the toothed rack from deviating from the longitudinal axis of the drive, with a gear wheel forming a gearing with the toothed rack, with an output shaft which is driven by the gear wheel and of which the rotation axis is at the same time that of the gear wheel, and with a pivot arm which is connected by a coupling with the output shaft and which serves for a centrifugal wheel of the centrifugal traction assembly, characterized by the fact that the guide element provided consists of a guide bar (20, 120) of round material, which extends parallel to and at a distance from the toothed rack (30, 130) and guides the said toothed rack, that the said toothed rack is attached by a longitudinal guide to the guide bar (20, 120) and the teeth (31, 131) of the toothed rack (30, 130) are provided on the side facing away from the guide bar (20, 120) and that the gear wheel (50, 150) supports the toothed rack (30, 130) against a lateral pivoting movement about the guide bar (20, 120).

2. Pivoting device in accordance with Claim 1, characterized by the fact that the toothed rack (30, 130) is prestressed by means of a spring element (34, 134) in opposition to the driving direction.

3. Pivoting device in accordance with Claim 1 or 2, characterized by the fact that the spring element is a gas pressure spring (34, 134).

4. Pivoting device in accordance with one of Claims 1–3, characterized by the fact that the toothed rack (30) is provided, on the side facing away from the teeth (31), with at least one attachment (32, 33) surrounding the guide bar (20) with a sliding fit.

5. Pivoting device in accordance with one of Claims 1–4, characterized by the fact that a thrust rod (40) actuated by the drive (11) is connected to the toothed rack (30).

6. Pivoting device in accordance with Claim 5, characterized by the fact that the thrust rod (40) is inserted in a boring which is provide in the toothed rack (30) and which takes the axial direction of the toothed rack (30).

7. Pivoting device in accordance with Claim 6, characterized by the fact that the boring serving to accommodate the thrust rod (40) is formed by a first blind hole of the toothed rack (30) and that the spring element (34) rests on the one band in a second blind hole provide in the toothed rack (30) and situated opposite the first blind hole and on the other band in a section integral with the vehicle.

8. Pivoting device in accordance with Claim 7, characterized by the fact that the spring element (34) is very largely accommodated within the second blind hole.

9. Pivoting device in accordance with one of Claims 1–3, characterized by the fact that the toothed rack (30) is secured to the outside of a cylinder (137) which is movable on the guide bar (120) and which is connected with supply and discharge channels (130, 141) through which a fluid serving to actuate the cylinder (137) can be introduced into this latter.

10. Pivoting device in accordance with Claim 9, characterized by the fact that the cylinder (137) tightly surrounds a fixed piston plate (136) which is rigidly connected to the guide bar (120) and which subdivides its internal chamber into two working chambers (146, 147), and that the cylinder (137) is connected with two supply and discharge channels (139, 141) for the operating fluid, which each lead into a working chamber (146 or 147).

11. Pivoting device in accordance with Claim 10, characterized by the fact that the supply and discharge channels (139, 141) take the form of axial borings with lateral apertures in the guide bar (120).

12. Pivoting device in accordance with one of Claims 9–11, characterized by the fact the spring element (134) is connected eccentrically with the gear wheel (150) and passes through a position of maximum spring tension between the two terminal positions of the cylinder (137).

13. Pivoting device in accordance with Claim 12, characterized by the fact that the output shaft (160) bears two gear wheels (150) which are spaced apart coaxially and which engage the toothed rack (130) and between which a likewise coaxial disc element (154) is provided for the purpose of joint rotation, to which the spring element (134) is eccentrically linked.

14. Pivoting device in accordance with Claim 13, characterized by the fact that the output shaft (160) is mounted, by an end section (164), on a housing element (102) detachably affixed to the housing, and has a central section (166) which is provided with external engaging devices (165) and onto which the gear wheels (159) and the disc element (154) can be mounted with engagement fast in rotation.

15. Pivoting device in accordance with at least one of the foregoing Claims, characterized by the fact that the toothed rack (30) is of substantially rectangular cross section.

16. Pivoting device in accordance with at least one of the foregoing claims, characterized by the fact that the coupling (70) between the output shaft (60) and the pivoting arm (80) has an angular gear (71).

17. Pivoting device in accordance with Claim 16, characterized by the fact that the angular gear (71) is provided, on the input side of its housing (72), with a ring flange (95) concentrically surrounding the axis of the output shaft (60) and having a wedge surface passing the whole way round, that on the output side of the housing (10) of the pivoting device a corresponding ring flange (91) is provided, which has a complementary wedge surface passing the whole way round, and that the two ring flanges can be clamped in respect of eachother by means of a clamping ring (96).

## Revendications

1. Dispositif de pivotement d'un ensemble à chaînes antidérapant d'un véhicule automobile, avec un entraînement, une crémaillière pouvant coulisser longitudinalement au moyen de l'entraînement, un élément de guidage empêchant le déport de la crémaillière à partir de l'axe longitudinal de l'entraînement, une roue dentée formant un mécanisme de transmission avec la crémaillière, un arbre mené entraîné par la roue dentée et dont l'axe de rotation est identique à celui de la roue dentée, et un bras de pivotement relié par un accouplement à l'arbre mené, ce bras de pivotement étant destiné à une roue centrifuge de l'ensemble antidérapant à chaîne, dispositif de pivotement caractérisé en ce qu'en tant qu'élément de guidage, est prévue une barre de guidage (20, 120) en matériau rond qui s'étend parallèle à est espacée de la crémaillière (30, 130) et qui guide la crémaillère, en ce que la crémaillère est mise en place avec un guidage longitudinal sur la barre de guidage (20, 120) et les dents (31, 131) de la crémaillère (30, 130) sont prévues du côté opposé à la barre de guidage (20, 120) et en ce que la roue dentée (50, 150) supporte la crémaillère (30, 130) à l'encontre d'un déplacement latéral autour de la barre de guidage (20, 120).

2. Dispositif de pivotement selon la revendication 1, caractérisé en ce que la crémaillère (30, 130) est précontrainte au moyen d'un élément élastique (34, 134) à l'encontre du sens d'entraînement.

3. Dispositif de pivotement selon la revendication 1 ou 2, caractérisé en ce que l'élément élastique est un ressort à gaz sous pression (34, 134).

4. Dispositif de pivotement selon l'une des revendications 1 à 3, caractérisé en ce que la crémaillère (30) présente sur son côté opposé aux dents (31) au moins une partie en saillie (32, 34) enserrant en ajustement glissant la barre de guidage (20).

5. Dispositif de pivotement selon l'une des revendications 1 à 4, caractérisé en ce qu'une barre de poussée (40) actionnée par l'entraînement (11) est accouplée à la crémaillère (30).

6. Dispositif de pivotement selon la revendication 5, caractérisé en ce que la barre de poussée (40) est enfichée dans un alésage de la crémaillère (30), alésage qui s'étend dans le sens axial de la crémaillère (30).

7. Dispositif de pivotement selon la revendication 6, caractérisé en ce que l'alésage destiné à recevoir la barre de poussée (40) est formée par un premier trou borgne de la crémaillère (30) et en ce que l'élément élastique (34) s'appuie d'une part, dans un second trou borgne en vis-à-vis avec le premier trou borgne dans la crémaillère (30) et d'autre part, sur une découpe partielle fixe par rapport au véhicule.

8. Dispositif de pivotement selon la revendication 5, caractérisé en ce que l'élément élastique (34) est introduit très largement dans le second trou borgne.

9. Dispositif de pivotement selon l'une des revendications 1 à 3, caractérisé en ce que la crémaillère (130) est fixée sur la face extérieure d'un cylindre (137) guidé coulissant sur la barre de guidage (120), cylindre qui est relié à des canaux d'arrivée et de sortie (139, 141) par lesquels un fluide peut être introduit dans le cylindre pour l'actionner.

10. Dispositif de pivotement selon la revendication 9, caractérisé en ce que le cylindre (137) entoure de façon étanche une plaque de piston fixe (136) reliée fixement à la barre de guidage (120), plaque de piston fixe qui divise son espace intérieur en deux chambres de travail (146, 147) et en ce que le cylindre (137) est relié aux deux canaux d'entrée et de sortie (139, 141) pour le fluide d'actionnement, canaux débouchant respectivement dans une chambre de travail (146 ou 147).

11. Dispositif de pivotement selon la revendication 10, caractérisé en ce que les canaux d'arrivée et de sortie (139, 141) sont formés par des alésages axiaux avec des ouvertures latérales dans la barre de guidage (120).

12. Dispositif de pivotement selon l'une des revendications 9 à 11, caractérisé en ce que l'élément élastique (134) est relié de façon excentrée à la roue dentée (150) et passe par une position de tension élastique maximum entre deux positions extrêmes de cylindre (137).

13. Dispositif de pivotement selon la revendication 12, caractérisé en ce que sur l'arbre mené (160) sont placées espacées et coaxiales, deux roues dentées (150) venant en prise avec la crémaillère (130) et entre lesquelles est prévu un élément de disque également coaxial (154) pour la rotation commune et sur lequel est articulé de façon excentrée l'élément élastique (134).

14. Dispositif de pivotement selon la revendication 13, caractérisé en ce que l'arbre mené (160) est supporté par un de ses tronçons d'extrémité (164) par un élément de carter (102) fixé de façon amovible sur le carter et présente un tronçon central (166) pourvu de dispositifs d'engrènement (165) extérieurs, tronçon central sur lequel les roues dentées (159) et l'élément de disque (154) peuvent être coulissés par engrènement de façon fixe en rotation.

15. Dispositif de pivotement selon au moins l'une des revendications précédentes, caractérisé en ce que la crémaillère (30) a une section sensiblement rectangulaire.

16. Dispositif de pivotement selon au moins l'une des revendications précédentes, caractérisé en ce que l'accouplement (70) entre l'arbre mené (60) et l'arbre de pivotement (80) présente une transmission angulaire (71).

17. Dispositif de pivotement selon la revendication 16, caractérisé en ce que la transmission angulaire (71) présente sur la face d'entrée de son carter (72) une bride annulaire (95) entourant de façon concentrique, l'axe de l'arbre mené (60) avec une surface en coin périphérique, en ce que sur la surface de sortie du carter (10) du dispositif de pivotement, est prévue une bride annulaire correspondante (91) avec une surface en coin complémentaire périphérique et en ce que les deux brides annulaires peuvent être bridées l'une contre l'autre au moyen d'une bague de blocage (96).

Fig.1

Fig.2

Fig. 3

Fig. 4

## Fig. 5

Fig.6

Fig.7